(19) **Europäisches Patentamt**
**European Patent Office**
**Office européen des brevets**

(11) **EP 3 974 293 B1**

(12) **EUROPEAN PATENT SPECIFICATION**

(45) Date of publication and mention
of the grant of the patent:
**31.01.2024 Bulletin 2024/05**

(21) Application number: **21190503.9**

(22) Date of filing: **10.08.2021**

(51) International Patent Classification (IPC):
**B62D 15/02** *(2006.01)* **B60W 30/00** *(2006.01)*
**G05D 1/02** *(2020.01)* **G08G 1/16** *(2006.01)*

(52) Cooperative Patent Classification (CPC):
**B62D 15/026; B60W 30/12; B62D 15/0255;**
**G08G 1/167**

(54) **DRIVING CONTROL APPARATUS FOR VEHICLE**

ANTRIEBSSTEUERUNGSVORRICHTUNG FÜR FAHRZEUG

APPAREIL DE COMMANDE DE CONDUITE POUR VÉHICULE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **24.09.2020 JP 2020160058**

(43) Date of publication of application:
**30.03.2022 Bulletin 2022/13**

(73) Proprietor: **Suzuki Motor Corporation**
**Shizuoka 432-8611 (JP)**

(72) Inventor: **SATO, Katsuhiko**
**Shizuoka, 432-8611 (JP)**

(74) Representative: **Henkel & Partner mbB**
**Patentanwaltskanzlei, Rechtsanwaltskanzlei**
**Maximiliansplatz 21**
**80333 München (DE)**

(56) References cited:
**JP-A- 2014 180 986 US-A1- 2020 148 202**
**US-A1- 2020 269 839**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

[Technical Field]

The present invention relates to driving control apparatuses for vehicles, and more particularly, relates to an override function in partially automated lane change systems.

[Background Art]

A variety of techniques for reducing burdens on drivers and for safe-driving support, for example, the practical application and international standardization of a "partially automated in-lane driving system (PADS)" and a "partially automated lane change system (PALS)" are being promoted.

In such a partially automated lane change system (PALS), an operational design domain (ODD), which is a condition under which automated lane change can be executed, is defined by a designer's intention, and if a driving condition of a vehicle deviates from the ODD during operation of the system, the driver is notified of an automated lane change function stop advance notice and an operation takeover request, and after the elapse of several seconds, fallback control of ACC and automatic steering is started.

For example, Patent Literature 1 by the inventor discloses, at a time of deviation from the system operational design domain, changing an override threshold value serving as a criterion for operation intervention to stop an automated lane change function to a value greater than at a normal time in the system operational design domain.

Patent Literature 2 discloses a lane change assist system including obstacle detection means that detects an obstacle present in the perimeter of a vehicle, white line detection means that detects a white line of a lane, request detection area calculation means that calculates a request detection area, which is requested when lane change control is implemented, on the basis of the detected white line, shielding decision means that decides whether a detection area of the obstacle detection means is smaller than the request detection area, control quantity calculation means that if the detection area of the obstacle detection means is smaller than the request detection area, calculates a control quantity of a vehicle which is required to make the detection area of the obstacle detection means equal to or larger than the request detection area, and vehicle control means that controls the vehicle on the basis of the calculated control quantity.

Patent Literature 3 discloses a method for selecting and executing at least one reactive action of a vehicle including a control unit receiving sensor data from a vehicle sensor system; detecting an emergency situation based on the sensor data; performing an evaluation; and selecting and implementing a reactive action for minimizing an accident risk of the vehicle based on the evaluation, where, in the evaluation, sensors that are uninvolved in the detection of the emergency situation are not taken into account or are taken into account at a lower weighting, are operated at a reduced performance, and/or are operated with a reduced scanning range.

[Citation List]

[Patent Literature]

[Patent Literature 1] JP 2020-132045 A, which belongs to the same document family as US 2020/269839 A1, discloses the features of the preamble of claim 1.
[Patent Literature 2] JP 2014 180986 A
[Patent Literature 3] US 2020/148202 A1

[Summary of Invention]

[Problem to be Solved by the Invention]

According to Patent Literature 1, there is an advantage that, even if the driver who is agitated by the function stop advance notice and the operation takeover notification due to ODD deviation during automated lane change makes excessive operation intervention, override is avoided and acceleration/deceleration, lane departure, and the like due to the excessive operation intervention can be prevented.

However, Patent Literature 1 assumes ODD deviation during automated lane change, but does not assume, for example, a case in which ODD deviation is predicted before start of automated lane change. In such a case, even if there is no other vehicle in a predetermined area of a neighboring lane to determine whether automated lane change will be performed and automated lane change can be started, there are concerns about an impact on traffic flow, such as approaching other vehicles, due to a change in the driving environment after that (even if it is inside the ODD).

The present invention has been made in view of the above-described actual situation, and an object thereof is to reduce an impact on traffic flow due to automated lane change in a situation where ODD deviation is predicted.

[Means for Solving the Problems]

In order to solve the above-described problems, there is provided a driving control apparatus as set out in independent claim 1. Advantageous developments are defined in the dependent claims.

[Advantageous Effects of Invention]

According to the driving control apparatus for the vehicle according to the present invention, in the case in which the deviation from the system operational design domain is predicted, because the second predetermined area larger than the first predetermined area at the normal time is set as a criterion of automated lane change, and automated lane change is not started and in-lane driving is maintained under a critical condition such that there is another vehicle in the second predetermined area larger than the first predetermined area although the other vehicle is outside the first predetermined area, the driving control apparatus is advantageous in reducing the impact on traffic flow due to automated lane change, such as approaching other vehicles, even if the driving environment is changed after that.

On the other hand, under a non-critical condition such that there is no other vehicle in the second predetermined area, even if the driving environment changes after that, it is unlikely that the vehicle will approach another vehicle driving in a neighboring lane, and rather, it is possible to reduce an impact on traffic flow by starting automated lane change and withdrawing from following driving at the set inter-vehicle distance with a preceding other vehicle, and it is expected to avoid the loss of such opportunities for automated lane change.

[Brief Description of Drawings]

[Figure 1] Figure 1 is a schematic view showing a driving control system of a vehicle.
[Figure 2] Figure 2 is a schematic plan view showing an external sensor group of the vehicle.
[Figure 3] Figure 3 is a block diagram showing the driving control system of the vehicle.
[Figure 4] Figure 4 is a flowchart showing control when ODD deviation is predicted.
[Figure 5] Figures 5A to 5C are schematic plan view respectively exemplifying: (5A) an automated lane change criterion at a normal time and when ODD deviation is predicted, (5B) a problem in automated lane change under a critical condition when ODD deviation is predicted, and (5C) automated lane change prevention control under a critical condition when ODD deviation is predicted.

[Mode for Carrying Out the Invention]

Hereinafter, an embodiment of the present invention will be described in detail with reference to the drawings.

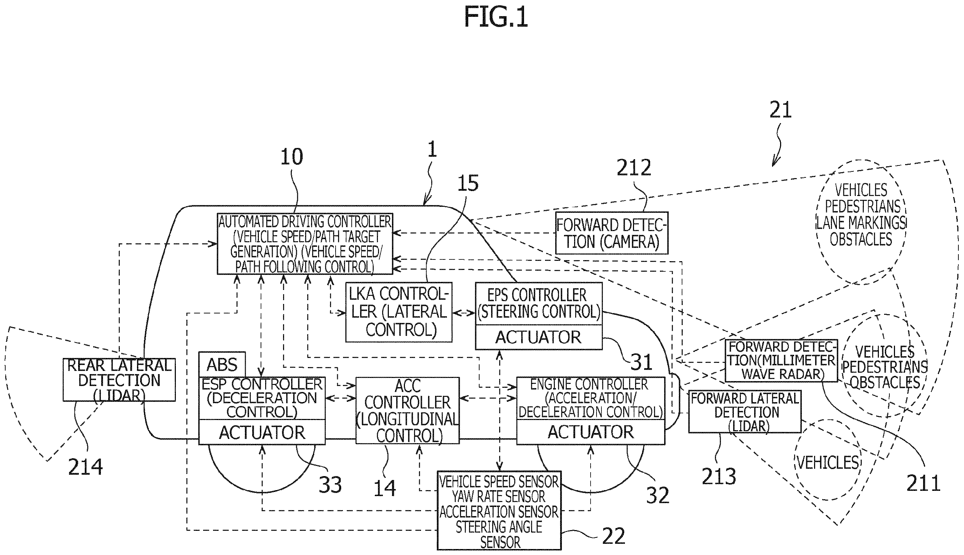

In Figure 1, a vehicle 1 equipped with a driving control system according to the present invention includes, in addition to common components, such as an engine and a vehicle body, of an automobile, an external sensor 21 for detecting a vehicle surrounding environment, an internal sensor 22 for detecting vehicle information, a controller/actuator group for speed control and steering control, an ACC controller 14 for inter-vehicle distance control, an LKA controller 15 for lane keeping support control, and an automated driving controller 10 for controlling them to perform path following control and executing partially automated in-lane driving (PADS) and automated lane change (PALS) in order to perform, at the vehicle side, recognition, determination, and operation conventionally performed by a driver.

The controller/actuator group for speed control and steering control includes an EPS (Electric Power Steering) controller 31 for steering control, an engine controller 32 for acceleration/deceleration control, and an ESP/ABS controller 33. An ESP (registered trademark; Electronic Stability Program) includes an ABS (Antilock Brake System) to form a stability control system (vehicle behavior stabilization control system).

The external sensor 21 is composed of a plurality of detection means for inputting lane markings on a road defining the vehicle's own driving lane and the neighboring lane, and presence of, and relative distance from, other vehicles, obstacles, people, and the like around the vehicle into the automated driving controller 10 as image data or point cloud data.

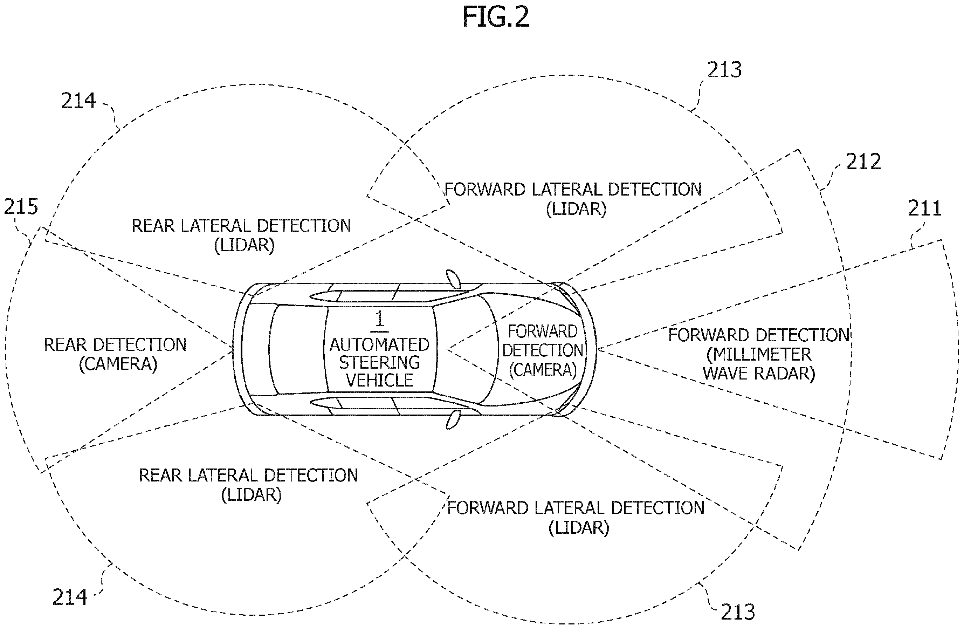

For example, as shown in Figure 2, the vehicle 1 includes a millimeter wave radar (211) and a camera (212) as forward detection means 211 and 212, LIDARs (Laser Imaging Detection And Ranging) as front lateral direction detection means 213 and rear lateral direction detection means 214, and a camera (back camera) as rearward detection means 215, covers 360 degrees around the vehicle, and can detect positions of and distance from vehicles, obstacles and the like, and lane marking positions within a predetermined distance in the front, rear, left, and right directions of the vehicle.

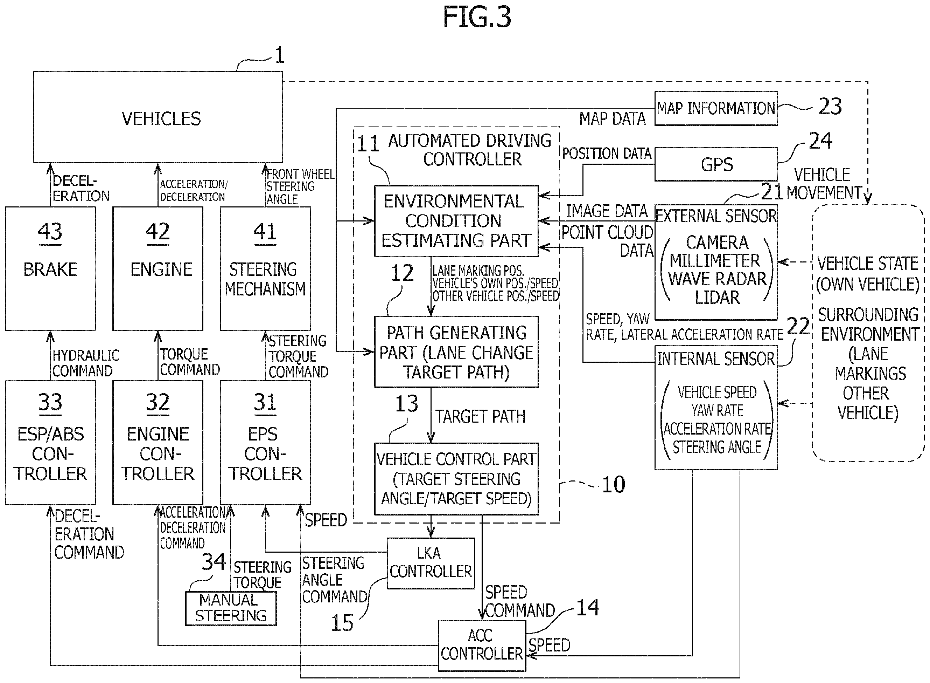

The internal sensor 22 is composed of a plurality of detection means, such as a vehicle speed sensor, a yaw rate sensor and an acceleration sensor, for measuring physical quantities representing the movement state of the vehicle, and their measurement values are input into the automated driving controller 10, ACC controller 14, LKA controller 15, and EPS controller 31 as shown in Figure 3.

The automated driving controller 10 includes an environmental condition estimating part 11, a path generating part 12 and a vehicle control part 13, and includes a computer for performing functions as described below, that is, a ROM storing programs and data, a CPU for performing arithmetic processing, a RAM for reading out the programs and data, and storing dynamic data and arithmetic processing results, an input/output interface, and the like.

The environmental condition estimating part 11 acquires the absolute position of the vehicle itself by matching the vehicle's own position information by positioning means 24 such as a GPS and map information, and on the basis of external data such as the image data and point cloud data obtained by the external sensor 21, estimates positions of lane markings of the vehicle's own driving lane and the neighboring lane, and positions and speeds of other vehicles. In addition, it acquires the movement state of the vehicle itself from internal data measured by the internal sensor 22.

The path generating part 12 generates a target path from the vehicle's own position estimated by the environmental condition estimating part 11 to an arrival target. In addition, it refers to map information 23, and generates a target path from the vehicle's own position to an arrival target point in lane change on the basis of the positions of the lane markings of the neighboring lane, the positions and speeds of the other vehicles, and the vehicle's moving state estimated by the environmental condition estimating part 11.

The vehicle control part 13 calculates a target speed and a target steering angle on the basis of the target path generated by the path generating part 12, transmits a speed command for constant speed cruise or inter-vehicle distance keeping and following cruise to the ACC controller 14, and transmits a steering angle command for path following to the EPS controller 31 via the LKA controller 15.

The vehicle speed is also input into the EPS controller 31 and ACC controller 14. Because a steering torque changes according to the vehicle speed, the EPS controller 31 refers to a steering angle-steering torque map for each vehicle speed and transmits a torque command to a steering mechanism 41. The engine controller 32, ESP/ABS controller 33, and EPS controller 31 control an engine 42, a brake 43, and the steering mechanism 41, and thereby control movement of the vehicle 1 in a longitudinal direction and a lateral direction.

(Outline of Partially Automated In-Lane Driving System)

Next, an outline of a partially automated in-lane driving system (PADS) will be described assuming driving on a highway (multi-lane road).

Partially automated in-lane driving (PADS driving) is enabled in a state in which both ACC controller 14 included in the ACCS and LKA controller 15 included in the LKAS are operating together with the automated driving controller 10.

At the same time as operation of the partially automated in-lane driving system, the automated driving controller 10 (path generating part 12) generates a target path within a single lane and a target speed on the basis of the external information (lanes, vehicle position, and positions and speeds of other vehicles driving in the lane and neighboring lane) obtained by the environmental condition estimating part 11 through the external sensor 21, and the internal information (vehicle speed, yaw rate, and acceleration) obtained by the internal sensor 22.

The automated driving controller 10 (vehicle control part 13) estimates the speed, attitude, and lateral displacement of the vehicle after $\Delta t$ seconds from a relationship between a yaw rate $\gamma$ and lateral acceleration ($d^2y/dt^2$) occurring due to vehicle movement by the vehicle's own position and movement characteristics of the vehicle itself, that is, a front wheel steering angle $\delta$ occurring when a steering torque T is applied to the steering mechanism 41 during traveling at a vehicle speed V, gives a steering angle command that makes the lateral displacement to "yt" after $\Delta t$ seconds to the EPS controller 31 via the LKA controller 15, and gives a speed command that makes the speed "Vt" after $\Delta t$ seconds to the ACC controller 14.

Although the ACC controller 14, LKA controller 15, EPS controller 31, engine controller 32, and ESP/AB S controller 33 operate independently of automatic steering, they are also operable according to command input from the automated driving controller 10 while a partially automated in-lane driving function (PADS) and a partially automated lane change system (PALS) described later are operating.

The ESP/ABS controller 33 that has received a deceleration command from the ACC controller 14 issues a hydraulic command to an actuator and controls braking force of the brake 43 to control the vehicle speed. In addition, an engine controller 32 that has received an acceleration/deceleration command from the ACC controller 14 controls an actuator output (degree of throttle opening) to give the engine 42 a torque command and controls driving force to control the vehicle speed.

The ACC function (ACCS) functions with a combination of hardware and software, such as the millimeter wave radar as the forward detection means 211 included in the external sensor 21, ACC controller 14, engine controller 32, and ESP/ABS controller 33 and the like.

That is, in a case in which there is no vehicle ahead, the ACC function performs constant speed cruise by setting a set vehicle speed (ACC set speed) as the target speed; and in a case of having caught up with the vehicle ahead (in a case in which a speed of the vehicle ahead is slower than ACC set speed), the ACC function performs following cruise following the vehicle ahead while maintaining an inter-vehicle distance corresponding to a time gap (inter-vehicle time = inter-vehicle distance / speed of vehicle) set in accordance with the speed of the vehicle ahead.

The LKA function (LKAS) detects the lane markings and the vehicle's own position by the environmental condition estimating part 11 of the automated driving controller 10 on the basis of image data obtained by the external sensor 21 (cameras 212 and 215), and performs steering control by the LKA controller 15 and the EPS controller 31 so as to be able to drive at a lane center.

That is, the EPS controller 31 that has received the steering angle command from the LKA controller 15 refers to a vehicle speed-steering angle-steering torque map, issues a torque command to an actuator (EPS motor), and gives a front wheel steering angle targeted by the steering mechanism 41.

The partially automated in-lane driving function (PADS) is implemented by combining longitudinal control (speed control and inter-vehicle distance control) by the ACC controller 14 and lateral control (steering control and lane keeping driving control) by the LKA controller 15 as described above.

(Outline of Partially Automated Lane Change System)

Next, an outline of the partially automated lane change system (PALS) will be explained on the assumption of automated lane change from a state of partially automated in-lane driving (PADS driving) on a highway (multi-lane road).

The partially automated lane change system (PALS) is a system that automatically performs lane change by determination of the system itself or the driver's instructions or approval, and is implemented by combining longitudinal control (speed control and inter-vehicle distance control) and lateral control (target path following control by automatic steering) by the automated driving controller 10.

At the same time as operation of the partially automated lane change system, the automated driving controller 10 (path generating part 12) constantly generates a target path for changing lanes from a currently driving lane to a neighboring lane on the basis of the external information (lane markings of the lane and neighboring lane, and positions and speeds of other vehicles driving in the lane and neighboring lane) obtained by the environmental condition estimating part 11 through the external sensor 21, and the internal information (vehicle speed, yaw rate, and acceleration) obtained by the internal sensor 22.

The automated lane change target path is a path that leads to a state of driving at the center of the neighboring lane by performing lane change from the currently driving lane, regarding other vehicles driving in the neighboring lane, their future positions and speeds are predicted, and automated lane change is executed by automatic steering by determination of the system in which it is determined that there is no other vehicle in a front predetermined area ZF, a rear predetermined area ZR, and a lateral predetermined area ZL of the neighboring lane set according to speed of the vehicle.

The above system determination is a determination based on a surrounding environment recognition result by the environmental condition estimating part 11 and the set condition, for example, when the vehicle is driving at a constant speed with the set vehicle speed (ACC set speed) as a target vehicle speed by partially automated in-lane driving (PADS driving) and catches up a preceding vehicle driving at the ACC set speed or less, (i) if a preceding vehicle speed is equal to or more than a predetermined lower limit speed (for example, 90% of the ACC set speed), the set inter-vehicle time is maintained and preceding vehicle following driving is continued, and (ii) if the preceding vehicle speed is less than the lower limit speed and there is no other vehicle in the predetermined areas (ZF, ZR, and ZL) of the neighboring lane, shift to automated lane change is performed.

Instead of starting automated lane change only by the system determination when the condition (ii) is met, it is also possible to configure to notify the driver that the system is in a lane change preparation completion state by an HMI device when the condition (ii) is met, and start automated lane change when operation of a blinker in the same direction as the target neighboring lane by the driver is detected within a predetermined time.

(Automated Lane Change Criterion)

The front predetermined area ZF and rear predetermined area ZR correspond to inter-vehicle distance that should be secured from another vehicle in front of and at the back of the vehicle, that is, front predetermined distance XF and rear predetermined distance XR, and they are calculated by the following expressions, respectively.

$$\text{Front predetermined distance (XF)} = \text{minimum inter-vehicle distance (S)} + \text{vehicle head time (TH)} \times \text{speed of the vehicle (V)},$$

where, minimum inter-vehicle distance (S) = speed of the vehicle (V) $\times$ inter-vehicle time (TG);

$$\text{vehicle head time (TH)} = \text{vehicle head distance (DH)} / V = TTC \times \Delta V / V;$$

$$TTC = \Delta V / \text{maximum deceleration of the vehicle } (D_{max});$$

and
$\Delta V = V - Vf$, where Vf denotes speed of the vehicle ahead.

$$\text{Rear predetermined distance (XR)} = \text{vehicle head time (TH)} \times \text{speed of vehicle behind (Vr)},$$

where, vehicle head time (TH) = vehicle head distance (DH) / V = TTC $\times$ $\Delta V$ / V;
TTC $= \Delta V$ / vehicle behind maximum deceleration (Dr); and
$\Delta V = Vr - V$, where Vr denotes speed of the vehicle behind.

As is clear from the above, since the front predetermined distance (XF) and rear predetermined distance (XR) vary depending on the speeds V, Vf, and Vr of the vehicle, vehicle ahead, and vehicle behind, respectively, a lookup table storing calculated values for each of the speed of the vehicle (V) and relative speed ($\Delta V$) for each is prepared, and corresponding values are applied by a reference process.

The front predetermined area ZF is an area defined by the longitudinal direction: the front predetermined distance XF $\times$ the lateral direction: width of the driving lane + width of the neighboring lane, and the rear predetermined area ZR is an area defined by the longitudinal direction: the rear predetermined distance XR $\times$ the lateral direction: width of the driving lane + width of the neighboring lane. In addition, the lateral predetermined area ZL is an area defined by the longitudinal direction: vehicle length $\times$ the lateral direction: width of the neighboring lane.

(ODD Deviation Detection and Monitoring)

In the partially automated in-lane driving system (PADS) and the partially automated lane change system (PALS) as described above, a system operational design domain (ODD), which is a condition under which partially automated in-lane driving and automated lane change can be executed, is defined by a designer's intention. The operational design domain (ODD) may include the following.

Road conditions: highway (two or more lanes on one side, lane marking with broken line, main line, and curvature 300 R or more), and general road (three or more lanes on one side, lane marking with broken line, lane width 3.25 m or more, and straight line);

Geographical conditions: urban area/other than mountainous area (geofence);
Environmental conditions: weather (sunny/cloudy/no wind), and time zone (nighttime restriction);
Traffic environment: movement of other vehicles (interruption and sudden braking), and traffic rule (speed limit and lane change prohibition);
Vehicle states: vehicle speed (within vehicle speed limit), longitudinal/lateral acceleration/deceleration (within acceleration/deceleration limit), within other system limit, and no system failure; and
Driver states: no driver abnormality, and no driver erroneous operation.

Of the above, conditions that should be especially monitored in consideration of ODD deviation prediction described later include suddenly changing environmental conditions like rainfall, snowfall, a gust of wind, and a crosswind and road surface changes (wet and snow coverage), which can be detected from image analysis (for example, rainfall and snowfall are from image analysis of the road surface and the crosswind is from image analysis of a streamer) of cameras constituting the forward detection means 212, and changes of the traffic rules and the road conditions can be detected based on the position information obtained by the positioning means 24 and the map information 23. Note that ODD deviation is determined to have occurred, also when an ESP (vehicle behavior stabilization control system/antiskid brake system) is activated due to a road surface change or a road lateral grade.

(Shift to Fallback Control Mode at ODD Deviation)

During operation of the partially automated in-lane driving system (PADS) or during operation of the partially automated lane change system (PALS), the environmental condition estimating part 11 monitors whether the vehicle driving state and the road conditions, geographical conditions, environmental conditions, and traffic conditions such as movement of other vehicles are maintained in the range of the ODD based on the external information obtained through the external sensor 21, the vehicle information obtained by the internal sensor 22, the map information 23, and the position information obtained by the positioning means 24, and when ODD deviation is detected, authority of driving operation is transferred from the system to the driver, and shift from partially automated in-lane driving or automated lane change to manual driving is performed.

For example, when ODD deviation is determined to have occurred due to a gust of wind or the like during operation of the partially automated lane change system (PALS), shift to the fallback control mode of the automated lane change function (ACC and automatic steering function) is performed, the driver is notified of ACC and automatic steering function stop and the takeover request, and the automated lane change function is stopped after a predetermined transition time.

The ACC fallback control gradually decreases an acceleration/deceleration command value (vehicle speed command) input to the engine controller 32 to 0 km/h/s with a predetermined inclination, and also gradually decreases a deceleration command value input to the ESP controller to 0 $m/s^2$ with a predetermined inclination. In addition, the automatic steering fallback control gradually decreases a steering torque command value (steering angle command) input to the EPS controller to 0 Nm with a predetermined inclination.

(ODD Deviation Prediction)

The ODD deviation determination by the environmental condition estimating part 11 includes not only determining ODD deviation at the vehicle's current driving position but also, for some conditions, predicting and determining an ODD deviation possibility at the vehicle's future driving position, that is, in front of the vehicle's course.

This corresponds to, for example, a case in which ODD deviation (environmental change, road surface change, traffic regulation, or the like) is detected in a distant view area in front of the vehicle's course by the external sensor 21, or a case in which ODD deviation (for example, road curvature 300R or more) is detected in front of the vehicle's course based on the position information obtained by the positioning means 24 and the map information 23.

Furthermore, the ODD deviation determination also includes setting a critical area which is within the aforementioned ODD range but in which the condition is at or greater than a state value close to an ODD limit and determining that ODD deviation is predicted in a case in which the condition is in such a critical area. This corresponds to, for example, a case in which the road curvature is equal to or greater than 90% of an ODD limit value, or a case in which a plurality of conditions, for example, an environmental change and a road surface change, are detected at the same time.

Even if shift to the fallback control mode is performed when ODD deviation is predicted during operation of the automated lane change system (PALS) as described above or even if ODD deviation is determined to have occurred, during a transition period to the fallback control mode, shift to automated lane change can be performed if there is no other vehicle in the predetermined areas (ZF, ZR, and ZL) of the neighboring lane.

When automated lane change is started in such a situation, as already mentioned, there are concerns about the impact on traffic flow, such as approaching other vehicles, due to a change in the driving environment after that (even if it is inside the ODD).

(Change of Automated Lane Change Criterion When ODD Deviation is Predicted)

The automated driving controller 10 according to the present invention has an automated lane change restriction function that sets the automated lane change criterion to second predetermined areas (ZF', ZR', and ZL) larger than the predetermined areas (ZF, ZR, and ZL) at the normal time, when ODD deviation is predicted (or when ODD deviation is determined to have occurred) during operation of the automated lane change system (PALS).

The second predetermined areas (front predetermined distance XF' and rear predetermined distance XR') applied to the lane change determination when ODD deviation is predicted (or when ODD deviation is determined to have occurred) are set, for example, as follows with respect to the aforementioned predetermined areas (front predetermined distance XF and rear predetermined distance XR) at the normal time.

Front predetermined distance (XF') = extended inter-vehicle distance ($S_{ex}$) + vehicle head time (TH) × speed of the vehicle (V),

where, extended inter-vehicle distance ($S_{ex}$) = speed of the vehicle (V) × extended inter-vehicle time (TG'); and TG' = $k_f$ × TG, $k_f$ = 1.4 to 2.0.

Rear predetermined distance (XR') = extended vehicle head time (TH') × speed of vehicle behind (Vr),

where, extended vehicle head time (TH') = extended vehicle head distance (DH') / V = TTC' × ΔV / V; and TTC' = $k_r$ × ΔV / vehicle behind maximum deceleration (Dr), $k_r$ = 1.4 to 2.0.

The coefficients ($k_f$ and $k_r$) are extension rates, and different values may be set for the front and the rear, or different values may be set depending on a type of ODD condition in which deviation is predicted and intensity of prediction.

As described above, by extending the predetermined areas applied to the lane change determination, when ODD deviation is predicted (or when ODD deviation is determined to have occurred), automated lane change is not started and in-lane driving is maintained under the critical condition in which there is no other vehicle in the predetermined areas (ZF, ZR, and ZL) at the normal time but there are other vehicles in the second predetermined areas (ZF' and ZR') close to those, and so even if the driving environment is changed after that, it is possible to avoid an impact on traffic flow due to automated lane change such as approaching other vehicles.

On the other hand, since the automated lane change function is not completely restricted, when ODD deviation is predicted (or when ODD deviation is determined to have occurred), automated lane change is permitted under a non-critical condition such that there is no other vehicle in the second predetermined areas (ZF' and ZR'), and it is possible to withdraw from the following driving of a preceding other vehicle in the vehicle's driving lane by performing automated lane change, and reduce an impact on traffic flow such as approaching the preceding other vehicle even if the driving environment is changed after that.

(Control Flow at ODD deviation Prediction during PALS driving)

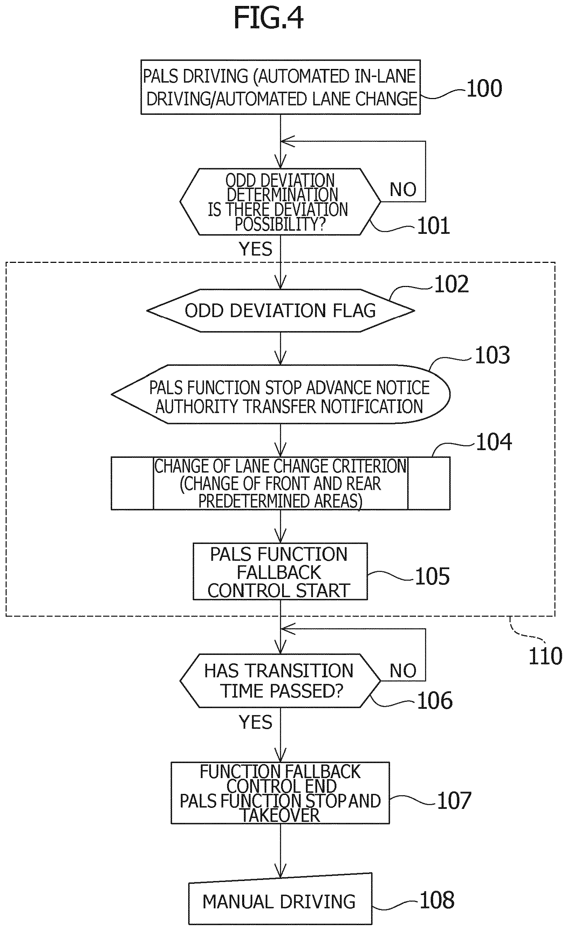

Next, a control flow when ODD deviation is predicted during operation of the partially automated in-lane driving system (PADS) and the partially automated lane change system (PALS) will be described with reference to Figure 4.

(1) PALS Driving

During operation of the partially automated lane change system (PALS), when there is no other vehicle in the predetermined areas (ZF, ZR, and ZL) of a neighboring lane during following driving at the set inter-vehicle time with the preceding vehicle by the partially automated in-lane driving system, automated lane change to the neighboring lane can be performed by system determination or the driver's blinker operation (step 100).

(2) ODD Deviation Determination

On the other hand, during operation of the partially automated lane change system (PALS), the environmental condition estimating part 11 monitors whether the vehicle driving state and the road conditions, the geographical conditions, the environmental conditions, and the traffic conditions such as movement of other vehicles are maintained within the range of the ODD based on the external information obtained through the external sensor 21, the vehicle information obtained by the internal sensor 22, the map information 23, and the position information obtained by the positioning means 24 (step 101).

(3) ODD Deviation Flag

In step 101, when ODD deviation in front of the course is detected or any condition at the current position in the ODD critical area is detected, ODD deviation is predicted, that is, it is determined that there is a possibility of ODD deviation, and an ODD deviation flag is set (step 102).

(4) PALS Function Stop Advance Notice and Authority Transfer Notification

At the same time as the ODD deviation flag, the driver is notified of ODD deviation event occurrence, automated lane change function stop, and steering and braking/driving operation takeover by a head-up display, a display in a meter panel, or voice, and counting of a transition time until operation takeover (for example, at ODD deviation prediction: ten seconds and at ODD deviation: four seconds) is started (step 103).

(5) Change of Lane Change Criterion

At the same time as the ODD deviation flag, as the automated lane change criterion, the second predetermined areas (ZF', ZR', and ZL) larger than the predetermined areas (ZF, ZR, and ZL) at the normal time are set (step 104).

(6) PALS Function Fallback Control Start

The automatic steering fallback control gradually decreases the steering torque command value input to the EPS controller to 0 Nm with the predetermined inclination, and the ACC fallback control gradually decreases the acceleration/deceleration command value (vehicle speed command) input to the engine controller 32 to 0 km/h/s with the predetermined inclination, and also decreases the deceleration command value input to the ESP controller 33 to 0 m/s$^2$ with the predetermined inclination (step 105).

(7) Transition Time Elapse to PALS Function Stop

It is determined whether the transition time until authority transfer (at ODD deviation prediction: ten seconds, and at ODD deviation: four seconds) has passed (step 106), and at the time point when the transition time passes, the PALS function (ACC and automatic steering function) is stopped (step 107), and operation is taken over by the driver and shifts to manual driving (step 108).

(Operation and Effects)

As detailed above, when ODD deviation is predicted during operation of the automated lane change system (PALS), the driving control device for a vehicle according to the present invention sets the automated lane change criterion to the second predetermined areas (ZF' and ZR') larger than the predetermined areas (ZF and ZR) at the normal time, so effects can be expected in cases exemplified below.

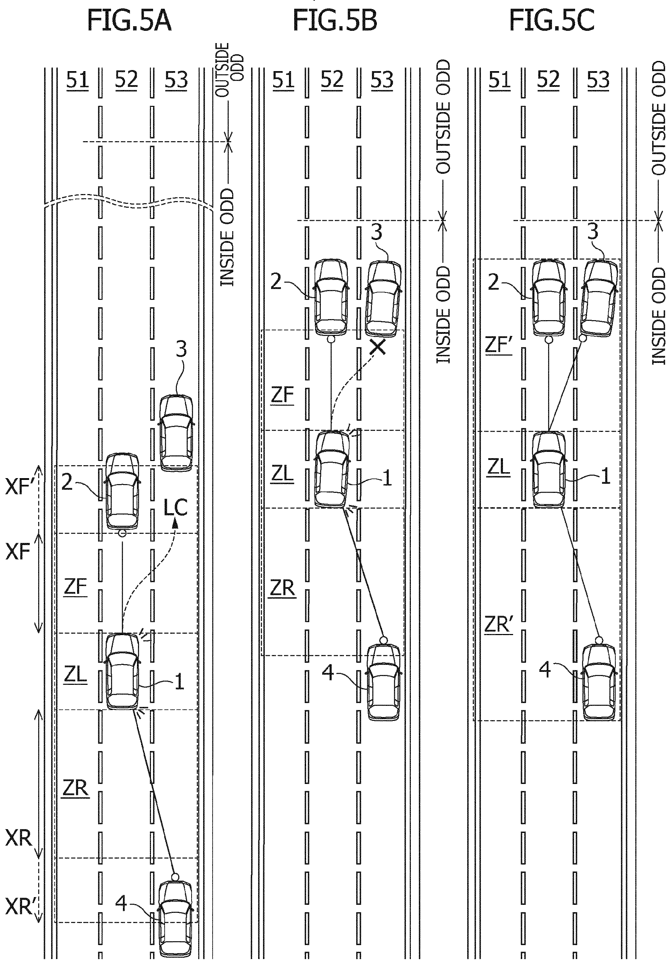

For example, as shown in Figure 5A, it is assumed that the vehicle 1 during PALS driving catches up a preceding other vehicle 2 in front of the vehicle's driving lane 52, performs following driving while keeping the ACC set inter-vehicle time, and there is a preceding other vehicle 3 in front of a right-side neighboring lane 53 and a following other vehicle 4 at the back, but the preceding other vehicle 3 is in front of the front predetermined area ZF, and the following other vehicle 4 is at the back of the rear predetermined area ZR.

In such a situation, when an ODD deviation event in a distant view area in front of the vehicle 1 is detected, for example, a strong wind in the lateral direction exceeding a predetermined value is detected according to an angle of a streamer, ODD deviation is predicted or ODD deviation is determined to have occurred, and even if shift to fallback control of the PALS function is performed, automated lane change is possible in the range of fallback control during the transition period, automated lane change LC to the neighboring lane 53 is performed by the driver's blinker operation in the predetermined areas (ZF and ZR) at the normal time, and as shown in Figure 5B, there is a risk of causing confusion in traffic flow, such as approaching the preceding other vehicle 3 that has suddenly decelerated due to the ODD deviation event, or approaching the following other vehicle 4.

In contrast, according to the driving control device according to the present invention, at the time point when ODD deviation is predicted or ODD deviation is determined to have occurred, the automated lane change criterion is set to the second predetermined areas (ZF' and ZR') larger than the predetermined areas (ZF and ZR) at the normal time, so automated lane change is not started under the critical condition such that the preceding other vehicle 3 or the following other vehicle 4 is inside the second predetermined areas (ZF' and ZR') although it is outside the predetermined area (ZF and ZR) at the normal time, as shown in Fig. 5A. Therefore, as shown in Figure 5C, the vehicle 1 maintains in-lane driving in the vehicle's driving lane 52, and it is possible to avoid an effect on traffic flow, such as approaching the preceding other vehicle 3 that has suddenly decelerated due to the ODD deviation event or approaching the following other vehicle 4.

On the other hand, in Figure 5A, under the non-critical condition such that the preceding other vehicle 3 is in front of the front predetermined area ZF' and the following other vehicle 4 is at the back of the rear predetermined area ZR', automated lane change is permitted, but even if the preceding other vehicle 3 suddenly decelerates due to the ODD deviation event, an over-approaching event will not occur, and opportunities for automated lane change are not restricted more than necessary.

Although the above embodiment shows the case in which both ACC function and automatic steering function shift to fallback control at the time of ODD deviation, only the automatic steering function may shift to fallback control.

Although the above embodiment describes the case in which ODD deviation is predicted or ODD deviation is determined to have occurred due to detection of an ODD deviation event in the distant view area in front of the vehicle 1, shift to fallback control is performed, and the PALS function is stopped after the transition time, it is also possible to configure, in the case in which ODD deviation is predicted because the driving environment of the vehicle 1 is inside the ODD, but it is in the critical area close to the ODD limit, to continue PALS driving in a state in which only the automated lane change criterion is set to the second predetermined areas (ZF' and ZR'), and to shift to fallback control at the time point when ODD deviation is determined to have occurred.

In that case, the second predetermined areas (ZF' and ZR') may be maintained from when ODD deviation is predicted to when the possibility of ODD deviation disappears, or until return to inside the ODD when ODD deviation has occurred after ODD deviation is predicted, and then the normal predetermined areas (ZF and ZR) may be set. Also in this case, it is preferable that the driver be notified of the disappearance of the possibility of ODD deviation and the return to inside the ODD by the HMI device as described above.

Although some embodiments of the present invention have been described above, the present invention is not limited to the embodiments, and various modifications and changes are possible within the scope of the present invention as defined by the appended claims.

[Reference Signs List]

10 Automated driving controller
11 Environmental condition estimating part
12 Path generating part
13 Vehicle control part
14 ACC controller
15 LKA controller
21 External sensor
22 Internal sensor
31 EPS controller
32 Engine controller
33 ESP/ABS controller
34 Manual steering (steering wheel)
41 Steering mechanism
42 Engine
43 Brake

**Claims**

1. A driving control apparatus (10) for a vehicle (1), comprising:

an environmental condition estimating part (11) including a surrounding recognition function (21) for recognizing a vehicle's driving lane, neighboring lanes, and other vehicles driving in the driving lanes and a function (22) for obtaining the vehicle's moving state;
a path generating part (12) for generating a target path on the basis of information obtained by the environmental condition estimating part (11); and
a vehicle control part (13) configured to perform speed control and steering control for making the vehicle (1) follow the target path,
wherein the driving control apparatus (10) having:

a function for performing automated in-lane driving by maintaining a set vehicle speed when there is no preceding other vehicle in the vehicle's driving lane, and maintaining a set inter-vehicle distance when there is a preceding other vehicle;
a function for performing automated lane change to a neighboring lane when there is no other vehicle in a first predetermined area of the neighboring lane; and

a function for performing fallback control of the functions in a case of deviation from a system operational design domain during operation of the function for performing automated in-lane driving and/or the function for performing automated lane change,

**characterized in that** the driving control apparatus (10) is configured to, in a case in which the deviation from the system operational design domain is predicted, set a second predetermined area (ZF', ZR', ZL) larger than the first predetermined area (ZF, ZR, ZL) as a criterion of the automated lane change.

2. The driving control apparatus (10) for the vehicle (1) as claimed in claim 1, wherein the function for performing fallback control of the functions includes a function for notifying a driver of stop of the functions and an operation takeover request in a case of the deviation from the system operational design domain and is configured to shift to manual driving after elapse of a predetermined transition time from the notification.

3. The driving control apparatus (10) for the vehicle (1) as claimed in claim 1 or 2, wherein the second predetermined area (ZF', ZR', ZL) is maintained from when the deviation from the system operational design domain is predicted to when the possibility of the deviation from the system operational design domain disappears, or until return to inside the system operational design domain when the deviation from the system operational design domain occurs after the deviation from the system operational design domain is predicted, and then the first predetermined area (ZF, ZR, ZL) is set as the criterion of the automated lane change when the possibility of the deviation from the system operational design domain disappears or at the return to inside the system operational design domain.

4. The driving control apparatus (10) for the vehicle (1) as claimed in any one of claims 1 to 3, wherein the prediction of the deviation from the system operational design domain is determined on the basis that a vehicle state, a traffic environment including interruption or sudden braking of another vehicle, an environmental condition including a road surface change obtained by the environmental condition estimating part (11), or a road condition including disappearance of lane markings, reduction in a number of lanes, or a lane merge section and a lane split section obtained by the environmental condition estimating part (11) by map information (23) and positioning means (24) deviates from the system operational design domain.

**Patentansprüche**

1. Eine Antriebssteuervorrichtung (10) für ein Fahrzeug (1), aufweisend:

einen Umgebungsbedingungsschätzteil (11) einschließlich einer Umgebungserkennungsfunktion (21) zum Erkennen einer Fahrzeugfahrspur, Nachbarspuren und anderen Fahrzeugen, die in den Fahrspuren fahren und einer Funktion (22) zum Erhalten des Fahrzeugbewegungszustands;

einen Pfaderzeugungsteil (12) zum Erzeugen eines Zielpfades auf der Basis von Informationen, die durch den Umgebungsbedingungsschätzteil (11) erhalten sind; und

einen Fahrzeugsteuerteil (13), der konfiguriert ist, um eine Geschwindigkeitssteuerung und eine Lenkungssteuerung durchzuführen, um zu bewirken, dass das Fahrzeug (1) dem Zielpfad folgt, wobei die Antriebssteuervorrichtung (10) aufweist:

eine Funktion zum Durchführen eines automatisierten In-Spur-Fahrens durch Aufrechterhalten einer eingestellten Fahrzeuggeschwindigkeit, wenn kein vorhergehendes anderes Fahrzeug in der Fahrzeugfahrspur vorliegt, und Aufrechterhalten einer eingestellten Zwischenfahrzeugentfernung, wenn ein vorhergehendes anderes Fahrzeug vorliegt;

eine Funktion zum Durchführen eines automatisierten Spurwechsels zu einer Nachbarspur, wenn kein anderes Fahrzeug in einem ersten vorbestimmten Gebiet der Nachbarspur vorliegt; und

eine Funktion zum Durchführen einer Rückfallsteuerung der Funktionen in einem Fall einer Abweichung von einem Systembetriebsausgestaltungsbereich während eines Betriebs der Funktion zum Durchführen eines automatisierten In-Spur-Fahrens und/oder der Funktion zum Durchführen eines automatisierten Spurwechsels,

**dadurch gekennzeichnet, dass** die Antriebssteuervorrichtung (10) konfiguriert ist, um, in einem Fall, in dem die Abweichung von dem Systembetriebsausgestaltungsbereich vorhergesagt ist, ein zweites vorbestimmtes Gebiet (ZF', ZR', ZL), das größer ist als das erste vorbestimmte Gebiet (ZF, ZR, ZL) als ein Kriterium des automatisierten Spurwechsels einzustellen.

**2.** Die Antriebssteuervorrichtung (10) für das Fahrzeug (1) nach Anspruch 1, wobei die Funktion zum Durchführen einer Rückfallsteuerung der Funktionen eine Funktion zum Benachrichtigen eines Fahrers über einen Stopp der Funktionen und eine Betriebsübernahmeanfrage umfasst, in einem Fall der Abweichung von dem Systembetriebsausgestaltungsbereich, und konfiguriert ist, um in ein manuelles Fahren nach einem Ablauf von einer vorbestimmten Übergangszeit von der Benachrichtigung zu schalten.

**3.** Die Antriebssteuervorrichtung (10) für das Fahrzeug (1) nach Anspruch 1 oder 2, wobei das zweite vorbestimmte Gebiet (ZF', ZR', ZL) aufrechterhalten wird, von wenn die Abweichung von dem Systembetriebsausgestaltungsbereich vorhergesagt ist, bis zu wenn die Wahrscheinlichkeit der Abweichung von dem Systembetriebsausgestaltungsbereich verschwindet, oder bis zu einer Rückkehr in den Systembetriebsausgestaltungsbereich, wenn die Abweichung von dem Systembetriebsausgestaltungsbereich auftritt, nachdem die Abweichung von dem Systembetriebsausgestaltungsbereich vorhergesagt worden ist, und dann das erste vorbestimmte Gebiet (ZF, ZR, ZL) als das Kriterium des automatisierten Spurwechsels eingestellt wird, wenn die Wahrscheinlichkeit der Abweichung von dem Systembetriebsausgestaltungsbereich verschwindet, oder bei der Rückkehr in den Systembetriebsausgestaltungsbereich.

**4.** Die Antriebssteuervorrichtung (10) für das Fahrzeug (1) nach einem der Ansprüche 1 bis 3, wobei die Vorhersage der Abweichung von dem Systembetriebsausgestaltungsbereich auf der Basis bestimmt wird, dass ein Fahrzeugzustand, eine Verkehrsumgebung einschließlich einer Unterbrechung oder eines plötzlichen Bremsens von einem anderen Fahrzeug, eine Umgebungsbedingung einschließlich einer Straßenoberflächenänderung, die durch den Umgebungsbedingungsschätzteil (11) erhalten sind, oder eine Straßenbedingung einschließlich eines Verschwindens von Spurmarkierungen, einer Verringerung einer Anzahl von Spuren oder eines Spurverschmelzungsabschnitts und eines Spuraufteilungsabschnitts, die durch den Umgebungsbedingungsschätzteil (11) durch Karteninformationen (23) und eine Positionierungseinrichtung (24) erhalten sind, von dem Systembetriebsausgestaltungsbereich abweicht.

**Revendications**

**1.** Appareil de commande de conduite (10) pour un véhicule (1), comprenant :

une partie d'estimation de conditions environnementales (11) comportant une fonction de reconnaissance des alentours (21) pour reconnaître une voie de conduite d'un véhicule, des voies voisines et d'autres véhicules conduisant dans les voies de conduite et une fonction (22) pour obtenir l'état de déplacement du véhicule ;
une partie de génération de trajet (12) pour générer un trajet cible sur la base d'informations obtenues par la partie d'estimation de conditions environnementales (11) ; et
une partie de commande de véhicule (13) configurée pour réaliser une commande de vitesse et une commande de direction pour amener le véhicule (1) à suivre le trajet cible,
dans lequel l'appareil de commande de conduite (10) présente :

une fonction pour réaliser une conduite en voie automatisée par le maintien d'une vitesse de véhicule réglée lorsqu'il n'y a pas d'autre véhicule précédent dans la voie de conduite du véhicule, et le maintien d'une distance entre véhicules réglée lorsqu'il y a un autre véhicule précédent ;
une fonction pour réaliser un changement de voie automatisé dans une voie voisine lorsqu'il n'y a pas d'autre véhicule dans une première zone prédéterminée de la voie voisine ; et
une fonction pour réaliser une commande de repli des fonctions dans un cas d'écart par rapport à un domaine de conception opérationnel de système au cours d'un fonctionnement de la fonction pour réaliser une conduite en voie automatisée et/ou de la fonction pour réaliser un changement de voie automatisé,
**caractérisé en ce que** l'appareil de commande de conduite (10) est configuré pour, dans un cas dans lequel l'écart par rapport au domaine de conception opérationnel de système est prédit, régler une deuxième zone prédéterminée (ZF', ZR', ZL), plus grande que la première zone prédéterminée (ZF, ZR, ZL) en tant qu'un critère du changement de voie automatisé.

**2.** Appareil de commande de conduite (10) pour le véhicule (1) selon la revendication 1, dans lequel la fonction pour réaliser une commande de repli des fonctions comporte une fonction pour notifier un conducteur d'un arrêt des fonctions et d'une demande de prise de contrôle du fonctionnement dans un cas de l'écart par rapport au domaine de conception opérationnel de système et est configurée pour passer en conduite manuelle après l'écoulement d'un temps de transition prédéterminé à partir de la notification.

3. Appareil de commande de conduite (10) pour le véhicule (1) selon la revendication 1 ou 2, dans lequel la deuxième zone prédéterminée (ZF', ZR', ZL) est maintenue à partir du moment auquel l'écart par rapport au domaine de conception opérationnel de système est prédit jusqu'au moment auquel la possibilité de l'écart par rapport au domaine de conception opérationnel de système disparaît, ou jusqu'à un retour à l'intérieur du domaine de conception opérationnel de système lorsque l'écart par rapport au domaine de conception opérationnel de système survient après que l'écart par rapport au domaine de conception opérationnel de système est prédit, puis la première zone prédéterminée (ZF, ZR, ZL) est réglée en tant que le critère du changement de voie automatisé lorsque la possibilité de l'écart par rapport au domaine de conception opérationnel de système disparaît ou au retour à l'intérieur du domaine de conception opérationnel de système.

4. Appareil de commande de conduite (10) pour le véhicule (1) selon l'une quelconque des revendications 1 à 3, dans lequel la prédiction de l'écart par rapport au domaine de conception opérationnel de système est déterminée sur la base qu'un état de véhicule, un environnement de trafic comportant une interruption ou un freinage soudain d'un autre véhicule, une condition environnementale comportant un changement de surface de route obtenue par la partie d'estimation de conditions environnementales (11), ou une condition de route comportant une disparition de marquages de voie, une réduction d'un nombre de voies, ou une section de jonction de voies et une section de séparation de voies obtenue par la partie d'estimation de conditions environnementales (11) par des informations de carte (23) et des moyens de positionnement (24), s'écarte du domaine de conception opérationnel de système.

# FIG.1

# FIG.2

215

214

213

212

211

FORWARD LATERAL DETECTION
(LIDAR)

REAR LATERAL DETECTION
(LIDAR)

REAR DETECTION
(CAMERA)

1
AUTOMATED
STEERING
VEHICLE

FORWARD
DETECTION
(CAMERA)

FORWARD DETECTION
(MILLIMETER
WAVE RADAR)

REAR LATERAL DETECTION
(LIDAR)

FORWARD LATERAL DETECTION
(LIDAR)

214

213

EP 3 974 293 B1

## FIG.3

# FIG.4

PALS DRIVING (AUTOMATED IN-LANE DRIVING/AUTOMATED LANE CHANGE —— 100

ODD DEVIATION DETERMINATION IS THERE DEVIATION POSSIBILITY? — NO — 101

YES

ODD DEVIATION FLAG — 102

PALS FUNCTION STOP ADVANCE NOTICE AUTHORITY TRANSFER NOTIFICATION — 103

CHANGE OF LANE CHANGE CRITERION (CHANGE OF FRONT AND REAR PREDETERMINED AREAS) — 104

PALS FUNCTION FALLBACK CONTROL START — 105

110

HAS TRANSITION TIME PASSED? — NO — 106

YES

FUNCTION FALLBACK CONTROL END PALS FUNCTION STOP AND TAKEOVER — 107

MANUAL DRIVING — 108

# FIG.5A

# FIG.5B

# FIG.5C

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020132045 A
- US 2020269839 A1
- JP 2014180986 A
- US 2020148202 A1